# EUROPEAN PATENT APPLICATION

(11) **EP 2 882 119 A1**
(43) Date of publication of application: **10.06.2015**
(21) Application number: 13195581.7
(22) Date of filing: 04.12.2013
(51) Int. Cl.: H04B 17/00

(54) **An RF signal receiver and a method for calibrating RF path in a signal receiver**

(71) Applicant: Advanced Digital Broadcast S.A., 1292 Chambesy (CH)
(72) Inventor: Grzelka, Piotr, 65-119 Zielona Gora (PL); Gizycki, Robert, 65-119 Zielona Gora (PL)
(74) Representative: Pawlowski, Adam

(57) **Abstract**

An RF signal receiver comprising an RF signal input (110) connected, via an RF signal path comprising RF signal processing components (120), to an integrated circuit system (130) for converting the RF signal to an IF signal using a mixer (132) having one input connected to output of the RF signal path with the RF signal processing components (120) and the other input to a local oscillator (LO) signal generated by a synthesizer (135), and an IF signal processor (134), wherein the integrated circuit system (130) further comprises a calibration controller (137) and a signal level adjustment circuit (136) configured to receive a reference signal from the synthesizer (135) and controllable by the calibration controller (137), wherein the output of the signal level adjustment circuit (136) is connected, as a reference RF signal, via a high impedance summing node (119) to the input of the RF signal path comprising RF signal processing components (120).

## Description

The present invention relates to a calibrating an RF path in a signal receiver, in particular a television signal receiver.

In television signal receivers, the received RF signal provided from a terrestrial, cable or satellite signal source, is first processed in an RF path comprising various RF signal processing components such as filters and amplifiers and then down-converted to an IF signal, which is then further processed. In order to provide precise signal processing, the RF path shall be calibrated, in order to take into account the parameter spread of the RF components. The calibration is typically performed at the end of device manufacturing process, wherein a reference signal source is connected to the RF signal input and the RF signal path parameters are adjusted such as to comply with the parameters of the received signal. This is a problematic, as it introduces delay to the manufacturing process and requires use of a reference signal source that has to be regularly verified.

Moreover, during the lifetime of the device, the parameters of the RF signal processing components may deviate from the original parameters for which the device was calibrated. This may be due to ageing of the components or to operation in external conditions which are offset from nominal conditions, such as excessive humidity or temperature. This may result in deterioration of quality and level of the RF signal.

The aim of the invention is to provide a signal receiver in which the RF path can be calibrated more easily, without the need to use an external reference RF signal source.

The object of the invention is a RF signal receiver comprising an RF signal input connected, via an RF signal path comprising RF signal processing components, to an integrated circuit system for converting the RF signal to an IF signal using a mixer having one input connected to output of the RF signal path with the RF signal processing components and the other input to a local oscillator (LO) signal generated by a synthesizer, and an IF signal processor, wherein the integrated circuit system further comprises a calibration controller and a signal level adjustment circuit configured to receive a reference signal from the synthesizer and controllable by the calibration controller, wherein the output of the signal level adjustment circuit is connected, as a reference RF signal, via a high impedance summing node to the input of the RF signal path comprising RF signal processing components.

Preferably, the receiver further comprises a switch controllable by the calibration controller, having a first input connected to the RF signal input, a second input connected to an internal reference resistor and an output connected to the high impedance summing node.

Another object of the invention is a method for calibrating of an RF signal receiver according to the invention, comprising the steps of terminating the RF input with a reference resistance, generating a reference RF signal in the synthesizer, providing the reference RF signal to the high impedance summing node and adjusting the reference signal generated by the synthesizer in the signal level adjustment circuit until a signal of desired parameters is received at the IF signal processor.

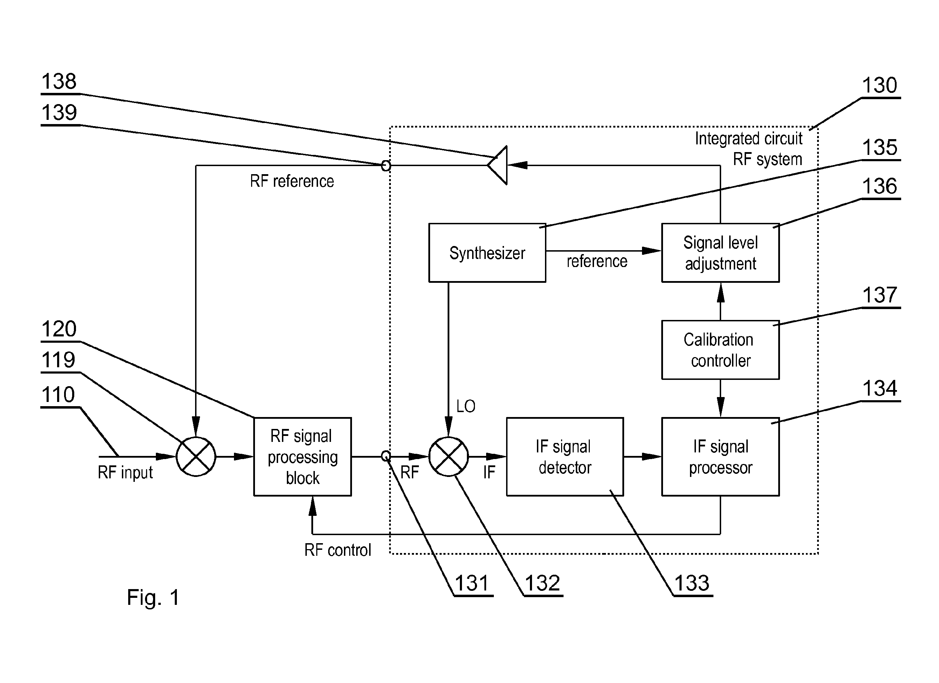

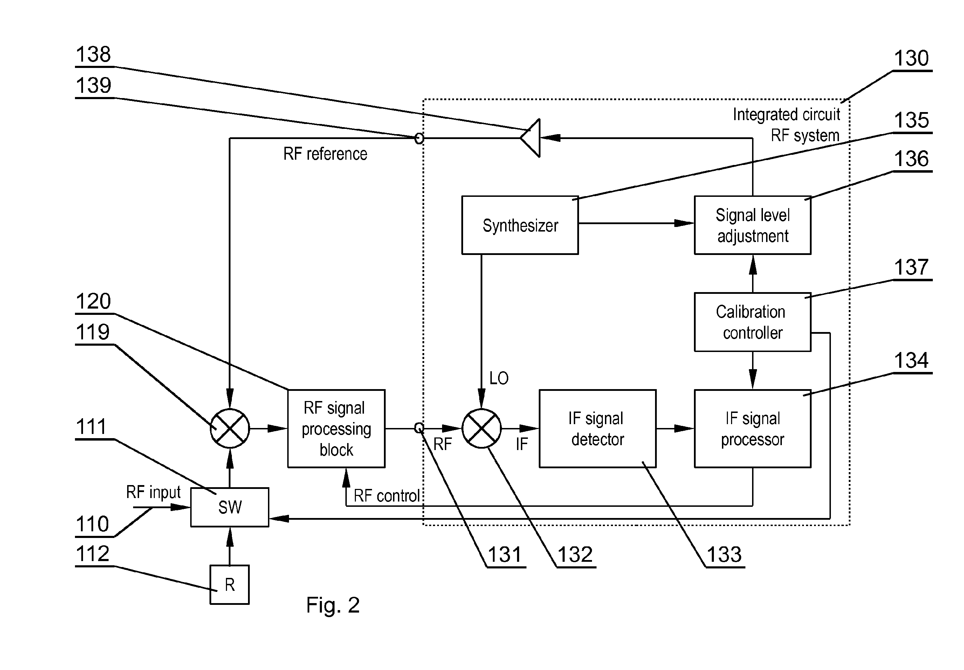

The object of the invention is shown on a drawing, in which Fig. 1 shows the structure of the first embodiment of the signal receiver according to the invention and Fig. 2 shows the structure of the second embodiment of the signal receiver according to the invention.

The first embodiment of the signal receiver according to the invention, as shown in Fig. 1, comprises a radio frequency (RF) signal input 110, such as an F-type connector. The RF reference 110 is connected via a high impedance summing node 119 to RF signal processing block 120, comprising RF signal processing components such as filters, amplifiers and attenuators. The processed RF signal is input to an integrated circuit RF system 130 via a dedicated integrated circuit pin(s) 131. In the integrated circuit system 130, the RF input signal is processed in a mixer 132 to convert it to an intermediate frequency (IF) signal. The IF signal is input to an IF signal detector 133 and then to an IF signal processor 134, which can generate control signals for the RF signal processing block 120 to adjust its parameters to improve the quality of the received RF signal. The mixer 132 mixes the RF signal with a signal generated by a tunable synthesizer 135, which functions as a local oscillator and produces a local oscillation signal LO. The components 131-135 form a part of typical integrated circuit RF systems.

Furthermore, the RF system 130 comprises a signal level adjustment block 136 which receives the signal from the synthesizer 135 and can adjust it to a level which is typical for a signal level to be received by the RF signal processing block 120. The adjusted signal is output via a buffer 138 to a dedicated pin(s) 139 of the integrated circuit chip 130. That signal is an RF reference signal that is input to the high impedance summing node 119. The generation of the reference signal is controlled by a calibration controller 137.

The RF signal receiver shown in Fig. 1 can be calibrated as follows. The RF input 110 is terminated with a reference resistance, such as a 75 Ohm or 50 Ohm. Next, the calibration controller 137 instructs the synthesizer 135 to generate a reference RF signal, which is adjusted to required level by the adjustment block 136 and output via the buffer 138 to pin 139, from where it is transmitted to the high impedance summing node 119 and so it reaches the RF signal receivers 120. Based on required level of calibration signal, the calibration corrections are calculated in the IF signal processor 134 and stored in a controller 137. The calibration corrections are used for calculating the unknown input signal level. Moreover, the level of the reference RF signal is adjusted until a signal of predetermined parameters is received at the IF signal processor 134. Then, the adjustment parameters of the block 136 are stored in the controller 137 and used as a calibration result. Such procedure can be easily performed at the end of the manufacturing process or manually by the device user.

Fig. 2 shows a second embodiment of the signal receiver according to the invention. It is equivalent to the embodiment shown in Fig. 1, but further comprises a switch 111 for switching the RF input path between the external input 110 and an internal resistor 112, such as a 75 Ohm resistor. The switch is controllable by the controller 137. This eliminates the need to attach an external terminator to the RF input path 110 and makes it possible to run the calibration procedure automatically. For example, the controller 137 may be configured to self-calibrate the received in predetermined periods (e.g. once per month) and/or when detecting a change in ambient conditions (humidity, temperature) which might affect the parameters of the RF signal path components.

## Claims

1. An RF signal receiver comprising an RF signal input (110) connected, via an RF signal path comprising RF signal processing components (120), to an integrated circuit system (130) for converting the RF signal to an IF signal using a mixer (132) having one input connected to output of the RF signal path with the RF signal processing components (120) and the other input to a local oscillator (LO) signal generated by a synthesizer (135), and an IF signal processor (134), **characterized in that** the integrated circuit system (130) further comprises a calibration controller (137) and a signal level adjustment circuit (136) configured to receive a reference signal from the synthesizer (135) and controllable by the calibration controller (137), wherein the output of the signal level adjustment circuit (136) is connected, as a reference RF signal, via a high impedance summing node (119) to the input of the RF signal path comprising RF signal processing components (120).

2. The RF signal receiver according to claim 1, further comprising a switch (111) controllable by the calibration controller (137), having a first input connected to the RF signal input (110), a second input connected to an internal reference resistor (112) and an output connected to the high impedance summing node (119).

3. A method for calibrating of an RF signal receiver according to any of claims 1-2, **characterized by** comprising the steps of terminating the RF input (110) with a reference resistance, generating a reference RF signal in the synthesizer (135), providing the reference RF signal to the high impedance summing node (119) and adjusting the reference signal generated by the synthesizer (135) in the signal level adjustment circuit (136) until a signal of desired parameters is received at the IF signal processor (134).
